# EUROPÄISCHE PATENTANMELDUNG

(11) **EP 0 758 720 A2**
(43) Veröffentlichungstag der Anmeldung: **19.02.1997**
(21) Anmeldenummer: 96106708.9
(22) Anmeldetag: 27.04.1996
(51) Int. Cl.: F16B 7/04, H02B 1/01

(54) **Verbindungselement zum schraubenlosen Zusammenfügen von profilierten und gelochten Baugruppenträgern für Elektroinstallationsverteiler**

(30) Priorität: 11.08.1995 DE 19529609
(71) Anmelder: SCHUPA-ELEKTRO-GMBH + CO KG, D-58570 Schalksmühle (DE)
(72) Erfinder: Sauer, Wolfgang, 58769 Nachrodt-Wiblingwerde (DE)

(57) **Zusammenfassung**

Es wird ein Verbindungselement beschrieben, das zum schraubenlosen Verbinden und Lösen von profilierten und gelochten Baugruppenträgern für Elektroinstallationsverteiler geeignet ist. Dabei sind in dem Verbindungselement (1) eine oder mehrere Federelemente (2) eingesetzt, die beim Zuführen von einem oder zwei entsprechend profilierten und gelochten Baugruppenträgern (5) auf das Verbindungselement (1) mit den Federelementen (2) eine kraftschlüssige, jederzeit lösbare Verbindung eingehen, wobei hierzu die Federelemente (2) des Verbindungselementes (1) nach außen über abstehende Federschenkel (6) verfügen, die außenseitig Rastnasen (7) tragen, womit sie nach dem Aufstecken der Baugruppenträger (5) in deren Lochungen (8) verrasten.

## Beschreibung

Die Erfindung betrifft ein Verbindungselement gemäß dem Oberbegriff der Patentansprüche 1 und 3.

Profilierte und gelochte Baugruppenträger werden unter Zuhilfenahme von Verbindungselementen der unterschiedlichsten Art durch Verschrauben und gegebenenfalls auch durch zusätzliches Zusammenstecken miteinander verbunden (vgl. DE-GM 88 02 893.3). Nachteilig bei diesen bekannten Verbindungstechniken ist, daß bis zu vier Schrauben je Baugruppenträger benötigt werden, was je nach Anzahl der zu verbindenden Baugruppenträger trotz Verwendung motorischer Schrauber äußerst zeitaufwendig sein kann.

Der Erfindung liegt daher die Aufgabe zugrunde, ein Verbindungselement zu schaffen, das durch schraubenloses Verbinden und Lösen von profilierten und gelochten Baugruppenträgern den Montageaufwand deutlich verringert.

Die Lösung dieser Aufgabe gelingt durch die kennzeichnenden Merkmale der Patentansprüche 1 und 3. Weitere vorteilhafte Ausgestaltungen des Verbindungselements gemäß der vorliegenden Erfindung sind in den Unteransprüchen angegeben.

Anhand eines in den Zeichnungsfiguren dargestellten Ausführungsbeispiels sei im folgenden das Verbindungselement für Baugruppenträger näher erläutert. Es zeigt:
- Fig. 1: eine perspektivische Ansicht eines profilierten Verbindungselementes mit eingesetzten Federelementen;
- Fig. 2: eine perspektivische Seitenansicht von zwei Baugruppenträgern, die mittels eines Verbindungselementes kraftschlüssig verbunden sind;
- Fig. 3: eine schematische Schnittdarstellung, bei der als Verbindungselement ebenfalls eine Feder in Form eines U-förmigen Winkelstücks dient, bei der jedoch der Federschenkel nach innen vorgespannt ist und dort unter Zuhilfenahme eines Exzenters in eine kraftschlüssige Position einstellbar ist;
- Fig. 4: eine schematische Schnittdarstellung gemäß Fig. 3 mit über dem Exzenter kraftschlüssig eingestelltem Federschenkel.

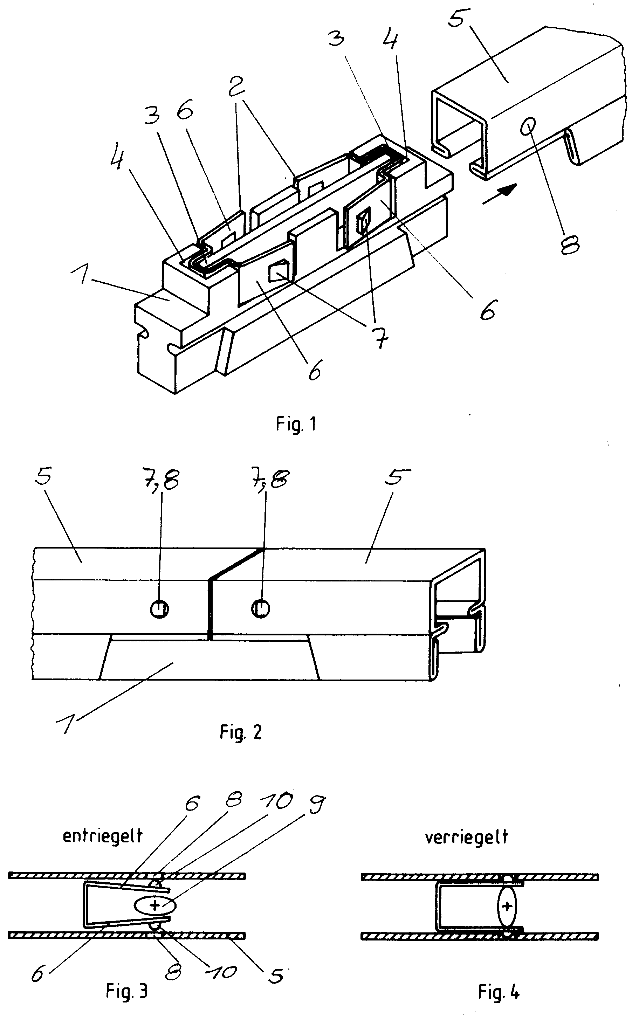

In Fig. 1 ist ein Verbindungselement 1 perspektivisch dargestellt, das als schraubenlose Verbindungselemente über zwei Federelemente 2 verfügt. Die Federelemente 2 sind als U-förmige Winkelstücke ausgebildet, deren Traverse 3 jeweils als Formstück gestaltet ist. Mit diesem Formstück 3 ist das Federelement 2 jeweils in eine entsprechende Ausformung 4 des Verbindungselementes 1 unter Klemmwirkung eingesetzt. Je nach Bestückung des Verbindungselementes 1 mit ein oder zwei Federelementen 2 können auf das Verbindungselement ein oder zwei Baugruppenträger 5 aufgeschoben werden. Die U-förmig gestalteten Federelemente 2 verfügen zu diesem Zweck jeweils über unter Federspannung ausgestellte Federschenkel 6, die außenseitig in Aufschiebe- bzw. Aufsteckrichtung der Baugruppenträger 5 mit keilförmig versehenen Rastnasen 7 versehen sind. Beim Aufschieben oder Aufstecken der Baugruppenträger 5 auf das Verbindungselement 1 werden die Federschenkel 6 an die Innenseiten der Baugruppenträger 5 gedrückt, bis sie mit ihren Rastnasen 7 in entsprechend korrespondierende Lochungen 8 im Baugruppenträger 5 einschnappen und dort zwischen Verbindungselement 1 und Baugruppenträger 5 eine kraftschlüssige Verbindung herstellen. Mittels eines Werkzeuges kann diese Verbindung jederzeit durch Eindrücken der Federschenkel und gleichzeitigem Zug an dem Baugruppenträger 5 gelöst werden. Diese Verbindung hat gegenüber einer Schraubverbindung durch beispielsweise vier Schrauben einen deutlich effektiveren Montage- und Demontagewert.

Fig. 2 zeigt eine erfindungsgemäße Verbindung von zwei Baugruppenträgern mittels eines Verbindungselementes mit Federelementen.

Fig. 3 stellt als Alternative ein U-förmiges Federelement 2 mit nach innen vorgespannten Federschenkeln 6 dar, zwischen denen ein Exzenter 9 angeordnet ist. Mit Hilfe dieses Exzenters 9 werden die Federschenkel 6 nach außen gedrückt (Fig. 4), wobei außen auf dem Schenkel 6 angebrachte Nocken 10 mit Lochungen 8 des zu verbindenden Teils 5 korrespondieren bzw. eine kraftschlüssige Verbindung herstellen. Das Lösen der Verbindungsstelle erfolgt durch Drehen des Exzenters in seine Entriegelungslage, wodurch sich die Nocken 10 aus den Lochungen 8 von 5 aufgrund der Federschenkelvorspannung zurückstellen.

### Bezugszeichenliste

- 1: - Verbindungselement
- 2: - Federelement
- 3: - Traverse von 2
- 4: - Ausformung von 1
- 5: - Baugruppenträger
- 6: - Federschenkel von 2
- 7: - Rastnasen von 6
- 8: - Lochungen von 5
- 9: - Exzenter
- 10: - Nocken von 6

## Patentansprüche

1. Verbindungselement zum schraubenlosen Verbinden und Lösen von profilierten und gelochten Baugruppenträgern für Elektroinstallationsverteiler, dadurch gekennzeichnet, daß in einem Verbindungselement (1) als schraubenlose Verbindungselemente eine oder mehrere Federelemente (2) eingesetzt sind, die beim Zuführen von einem oder zwei entsprechend profilierten und gelochten Baugruppenträgern (5) auf das Verbindungselement (1) mit diesen Federelementen (2) eine kraftschlüssige, jederzeit lösbare Verbindung eingehen, wobei hierzu die Federelemente (2) des Verbindungselementes (1) nach außen über abstehende Federschenkel (6) verfügen, die außenseitig Rastnasen (7) tragen, womit sie nach dem Aufstecken der Baugruppenträger (5) in deren Lochungen (8) verrasten.

2. Verbindungselement nach Anspruch 1, dadurch gekennzeichnet, daß als Federelemente (2) U-förmige Winkelstücke dienen, die als Traverse (3) über ein Formstück verfügen, womit sie jeweils in eine entsprechende Ausformung (4) im Verbindungsträger (1) unter Klemmwirkung einsetzbar sind.

3. Verbindungselement zum schraubenlosen Verbinden und Lösen von profilierten und gelochten Baugruppenträgern für Elektroinstallationsverteiler, dadurch gekennzeichnet, daß als Verbindungselement ein U-förmiges Federelement (2) dient, dessen Federschenkel (6) nach innen vorgespannt sind, und die mittels eines Exzenters (9) in eine Verriegelungsstellung einstellbar sind, wobei diese mit auf der Außenseite angebrachten Nocken (10) in korrespondierende Lochungen (8) eines Baugruppenträgers (5) greifen und eine kraftschlüssige Verbindung herstellen.

4. Verbindungselement nach Anspruch 3, dadurch gekennzeichnet, daß zur Entriegelung der kraftschlüssigen Verbindung der Exzenter (9) in die Ausgangsstellung gestellt wird.
